# EUROPEAN PATENT SPECIFICATION

(11) **EP 3 686 900 B1**
(45) Date of publication and mention of the grant of the patent: **03.05.2023**
(21) Application number: 17925989.0
(22) Date of filing: 20.09.2017
(51) Int. Cl.: G21C 3/34, G21C 3/352, G21C 3/356

(54) **POSITIONING GRID AND FUEL ASSEMBLY**
POSITIONIERUNGSGITTER UND BRENNSTABBÜNDEL
GRILLE DE POSITIONNEMENT ET ASSEMBLAGE COMBUSTIBLE

(43) Date of publication of application: 29.07.2020
(73) Proprietor: Ling Ao Nuclear Power Co., Ltd., Shenzhen, Guangdong 518028 (CN); China Nuclear Power Technology Research Institute Co., Ltd., Shenzhen, Guangdong 518031 (CN); China General Nuclear Power Corporation, Shenzhen, Guangdong 518028 (CN); CGN Power Co., Ltd., Shenzen, Guangdong 518028 (CN)
(72) Inventor: PANG, Zhengzheng, Shenzhen Guangdong 518028 (CN); ZHANG, Yuxiang, Shenzhen Guangdong 518028 (CN); LI, Weicai, Shenzhen Guangdong 518028 (CN); JI, Shizhe, Shenzhen Guangdong 518028 (CN)
(74) Representative: Westphal, Mussgnug & Partner, Patentanwälte mbB
(86) International application number: PCT/CN2017/102497
(87) International publication number: WO 2019/056222

(56) References cited:
- EP-A1- 0 027 203
- EP-A1- 2 741 297
- WO-A1-2017/004961
- CN-A- 87 104 308
- CN-A- 101 055 775
- CN-A- 105 023 618
- CN-U- 204 884 578
- CN-U- 204 884 578
- JP-A- 2004 003 982
- US-A- 5 666 389
- US-A1- 2006 222 140

## Description

### Technical Field

The invention relates to the technical field of nuclear reactors, in particular to a spacer grid and a fuel assembly.

### Background Art

In a fuel assembly, a fuel rod is held in a framework by resilient members in a spacer grid. A conventional spacer grid is typically formed by a cross-insertion of two orthogonally oriented strips to form an egg-crate structure, and a resilient clamp member is provided within each grille cell of the egg-crate. These resilient clamp members are typically stamped and formed on the strips itself, or are secured to the strips by welding or the like. The conventional spacer grid is characterized by no relative movement between the resilient clamp member in the grille cell and the strip.

The fuel assembly skeleton is formed by connecting a spacer grid with a control rod guide tube. Typically there are two types of connection between the spacer grid and the control rod guide tube: 1) a fixed connection, the spacer grid being welded or expanded and joined with the control rod guide tube, the spacer grid and the guide tube being not allowed to slide relatively; and 2) a floating connection, the spacer grid being sleeved on the guide tube, axial limiting devices being secured on the guide tube at two sides of the spacer grid, and the spacer grid being allowed to axially slide along the guide tube within a range defined by the axial limiting device.

However, as to the spacer grid and guide tube in the fixed connection, the guide tube is subjected to a large tensile stress at the beginning of a service life, thus the growth of the assembly is accelerated, meanwhile the straightness of a fuel rod may be reduced due to the growth of the fuel rod being restrained by the spacer grid. As to the spacer grid and the guide tube in the floating connection, the lateral rigidity of the fuel assembly is low, thus the fuel assembly is easy to bend under normal operation conditions, and an adverse influence will be imposed on the cooling of the fuel rod will be when the spacer grid is subjected to a large impact under an earthquake or other accident condition. It is known from EP 2 741 297 to use a support insert for a nuclear fuel assembly spacer grid with an integral insert for neighbouring grid celles.

### Summary of the Invention

### Technical Problem

A technical problem to be solved in the invention is to provide a spacer grid for improving the economy, reliability and safety of a fuel assembly and a fuel assembly with the spacer grid.

### Solution to the Problem

### Technical Solution

A technical solution adopted by the invention to solve the technical problem is to construct a spacer grid, comprising two grille units and a clamp unit; wherein the two grille units are disposed in an opposing vertical configuration, and the clamp unit is inserted between the two grille units and allowed to move vertically relative to the grille units, forming a floating connection between the two grille units.

The grille unit includes a plurality of parallelly spaced first strips and a plurality of parallelly spaced second strips, and the first strips and the second strips are crossed with each other to form the network-like grille unit;
the clamp unit includes a plurality of annular clamp sub-units, and the plurality of clamp sub-units are respectively accommodated in grille cells of the grille units, and are used for clamping fuel rods and reactivity worth compensation rods respectively.

Preferably, the first strip is provided with a plurality of first insertion slots spaced arranged along a length direction thereof and first clamp slots arranged on two sides of the first insertion slot; the first insertion slot and the first clamp slot are disposed on a same side of the first strip, and openings of the first insertion slot and the first clamp slot face a same direction;
the second strip is provided with a plurality of second insertion slots spaced arranged along a length direction thereof and second clamp slots arranged on two sides of the second insertion slot; the second insertion slot and the second clamp slot are disposed on two opposite sides of the second strip, and openings of the second insertion slot and the second clamp slot face opposite directions;
the first insertion slot and the second insertion slot are matched and inserted, with their openings toward one another; the first clamp slots and the second clamp slots respectively clamp the clamp sub-units.

Preferably, the first strip is provided with a plurality of spaced protruding first mixing vanes; the first mixing vane obliquely bends in a lateral direction and extends into a grille cell of the grille unit;
the second strip is provided with a plurality of spaced protruding second mixing vanes; and the second mixing vane obliquely bends in a lateral direction and extends into the grille cell of the grille unit.

The plurality of the clamp sub-units are cross-joined on a same plane to form the integrated clamp unit.

A side wall of each clamp sub-unit is provided with joining slots with openings facing one side, and an adjacent clamp sub-unit is upside down to be matched and inserted, with the openings of their joining slots toward one another.

Preferably, each of the clamp sub-units is cross-joined with at least two of the clamp sub-units.

Preferably, the spacer grid further comprises an outer frame provided arranged around a periphery of the two grille units.

Preferably, the spacer grid further comprises a connection structure provided on the grille unit for securing the guide tube.

Preferably, the connection structure comprises welding tabs projecting oppositely on the upper and lower grille units.

Preferably, the connection structure comprises a connection tube fixedly penetrating through the grille cells of the upper and lower grille units.

The invention further provides a fuel assembly comprising the spacer grid according to any of the above.

### Advantageous Effects of the Invention

### Advantageous Effects

The invention has the following advantageous effects: the grille units are disposed in an upper and lower configuration, the clamp unit is disposed between the grille units in a floating mode, thus reducing the stress of a guide tube in the fuel assembly and the growth of the assembly, ensuring the lateral rigidity of the fuel assembly, preventing the fuel assembly from bending and reducing the difficulty in inserting a control rod downwards during a normal operation, improving the strength of the spacer grid, improving the buckling or deformation margin under impaction during earthquake of the spacer grid and the stability of a coolant flow channel under an accident condition, ensuring the control rod guide tube not to be too deformed to prevent insertion of the control rod downwards to shut down the reactor, and preventing the flow area between the fuel rods from being reduced due to excessive deformation of the spacer grid.

### Brief Description of the Drawings

The invention will now be further described with reference to the accompanying drawings and embodiments, in which:
FIG. 1 is a schematic structural diagram of a spacer grid according to an embodiment of the present invention;
FIG. 2 is a structural top view of the spacer grid according to the embodiment of the present invention;
FIG. 3 is an assembled diagram of grille units and a clamp unit in the spacer grid according to the embodiment of the present invention;
FIG. 4 is a schematic structural diagram of the grille unit of FIG. 3;
FIG. 5 and FIG. 6 are schematic structural diagrams of a first strip and a second strip of the grille unit of FIG. 4, respectively;
FIG. 7 is a schematic structural diagram of the two grill units of FIG. 3 when they are symmetrically arranged vertically;
FIG. 8 is a schematic structural diagram of the clamp unit of FIG 3; and

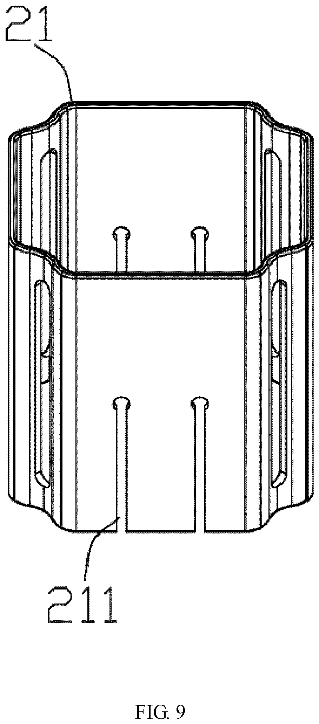

FIG 9 is a schematic structural diagram of a clamp sub-unit of FIG 8.

### Detailed Description of the Invention

In order to render a more apparent understanding of technical features, objects and effects of the present invention, specific embodiments thereof will be described in detail with reference to the accompanying drawings.

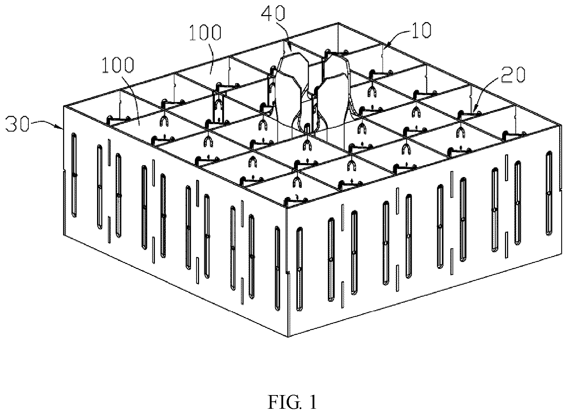

As shown in FIGS. 1 to 3, a spacer grid according to an embodiment of the present invention includes two grille units 10 and a clamp unit 20. The two grille units 10 are disposed in an opposing vertical configuration and divided into an upper part and a lower part; the clamp unit 20 is inserted between the two grille units 10 and can move vertically relative to the grille units 10, forming a floating connection between the two grille units 10, thus the stress of a guide tube can be reduced, the bending of a fuel rod is prevented, and the growth of the assembly is reduced, in a fuel assembly.

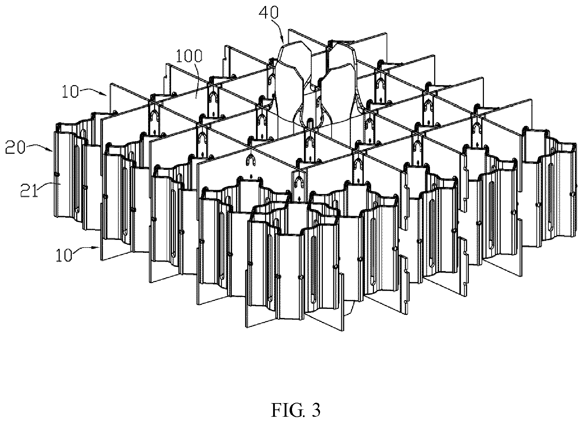

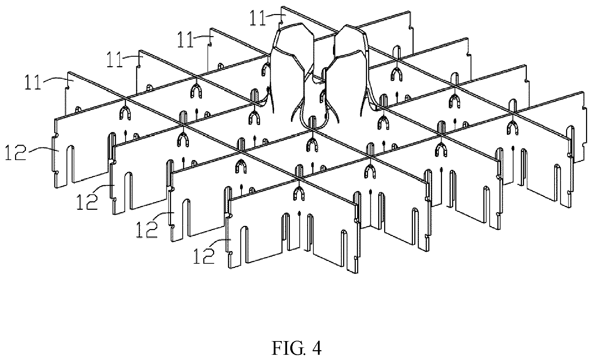

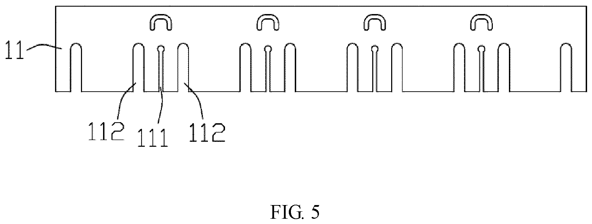

As shown in FIG. 3 and FIG. 4, each grille unit 10 may include a plurality of parallelly spaced first strips 11 and a plurality of parallelly spaced second strips 12, and the first strips 11 and the second strips 12 are crossed with each other (e.g., orthogonally crossed with each other) to form a network-like grille unit 10. A plurality of grille cells 100 formed in the grille unit 10 may be a square array or a hexagonal array or the like, and are respectively used for fuel rods, guide tubes or the like to penetrate through, and the clamp unit 20 mainly clamps and fixes the fuel rods in the grille cells 100. As shown in FIG. 5, the first strip 11 can be provided with a plurality of first insertion slots 111 spaced arranged along a length direction thereof and first clamp slots 112 arranged on two sides of the first insertion slot 111; the first insertion slot 111 is matched and inserted with the second strip 12, and the first clamp slot 112 is matched and inserted with the clamp unit 20. The first insertion slot 111 and the first clamp slot 112 are disposed on a same side of the first strip 11, and the openings of the first insertion slot 111 and the first clamp slot 112 face a same direction.

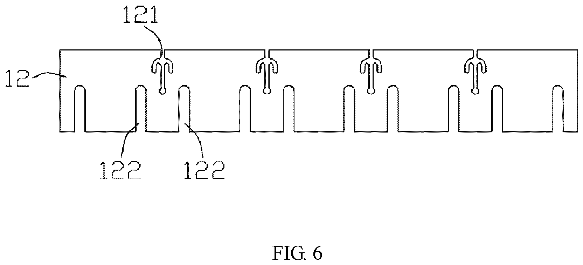

As shown in FIG. 6, the second strip 12 is provided with second insertion slots 121 spaced arranged along a length direction thereof and second clamp slots 122 arranged at two sides of the second insertion slot 121; the second insertion slot 121 is matched and inserted with the first strip 11, the second clamp slot 122 is matched and inserted with the clamp unit 20, the second insertion slot 121 and the second clamp slot 122 are disposed on two opposite sides of the second strip 12, and the openings of the second insertion slot 121 and the second clamp slot 122 face opposite directions.

When the first strip 11 and the second strip 12 are crossed with each other, the first insertion slot 111 and the second insertion slot 121 are matched and inserted, with their openings toward one another; then the first strip 11 and the second strip 12 are secured together via welding at the intersections (crescent-like welding areas as shown in FIGS. 5 and 6). In one grille unit 10, the openings of the first clamp slot 112 and the second clamp slot 122 face a same direction for insertion of the clamp unit 20. Four walls (excluding the outermost peripheral grille cells) of the grille cells of the grille unit 10 are respectively formed by the first strip 11 and the second strip 12, each wall is provided with two clamp slots to be matched with the clamp unit 20, both the two clamp slots of one wall being the first clamp slots 112 or the second clamp slots 122.

The first strip 11 and the second strip 12 are made of zirconium alloy and have a same width. The width of the grille unit 10 formed by crossing the first strips 11 and the second strips 12 is the same as the width of the first strip 11 and the second strip 12.

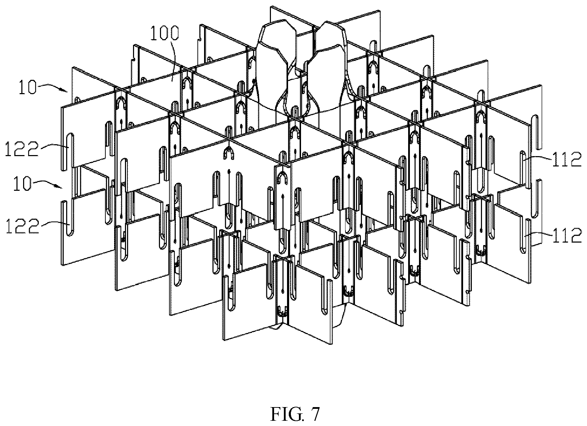

In the spacer grid, the two grille units 10 are arranged symmetrically up and down, and the vertically corresponding grille cells 100 are communicated, as shown in FIG. 7. When the two grill units 10 are placed symmetrically up and down, the openings of the first clamp slot 112 and the second clamp slot 122 of the upper grill unit 10 face down, and the openings of the first clamp slot 112 and the second clamp slot 122 of the lower grill unit 10 face down, clamping on the upper and lower sides of the clamp unit 20 respectively. Moreover, the clamp unit 20 is movable up and down within a range defined by the first clamp slot 112 and the second clamp slot 122, as shown in FIG. 3.

In addition, in the grille unit 10, the first strip 11 can be provided with a plurality of spaced protruding first mixing vanes (not shown); the first mixing vane obliquely bends in a lateral direction and extends into the grille cell 100 of the grille unit 10; the second strip 12 can be provided with a plurality of spaced protruding second mixing vanes (not shown); the second mixing vane obliquely bends in a lateral direction and extends into the grille cell 100 of the grille unit 10. The configuration of the mixing vanes can improve the mixing efficiency of coolant and the critical heat flux of fuel. Since no interference member exists on the first strip 11 and the second strip 12, a mixing structure such as a mixing vane with a larger projection area can be provided to improve the critical heat flux of the fuel, the thermal margin of a reactor, and the safety, as well as the fuel economy.

In the present invention, the clamp unit 20 is manufactured independently of the grill unit 10, without the necessity of being stamped and formed on the strips of the grill unit 10, thereby greatly reducing the types of the strips and simplifying the manufacturing procedure. In addition, the height of the spacer grid can be reduced, thereby reducing hydraulic resistance. The clamp unit 20 has a larger flow area than a conventional clamping member, rendering a smaller hydraulic resistance of the spacer grid.

The clamp unit 20 is used for clamping fuel rods and reactivity worth compensation rods, respectively, in the grille cell 100.

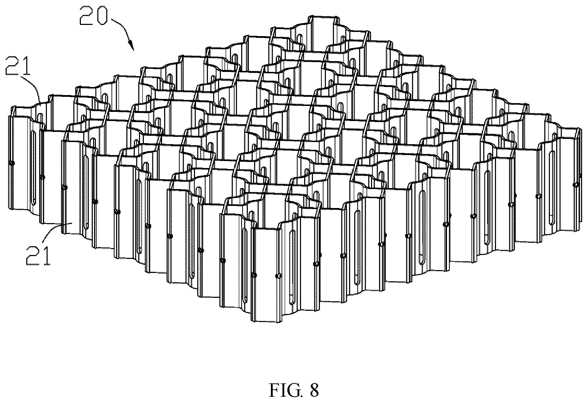

As shown in FIG. 3 and FIG. 8, the clamp unit 20 includes a plurality of annular clamp sub-units 21 respectively accommodated in the grille cells of the grille unit 10, and the first clamp slots 112 and the second clamp slots 122 clamp and secure the clamp sub-units 21 respectively in an insertion mode. A diameter of an inner ring of the clamp sub-unit 21 for clamping the fuel rod or the reactivity worth compensation rod is equal to or slightly smaller than an outer diameter of the fuel rod or the reactivity worth compensation rod, to resiliently clamp and secure the fuel rod or the reactivity worth compensation rod.

The first clamp slots 112 and the second clamp slots 122 of the upper grille unit 10 are respectively inserted to the upper ends of the side walls of the clamp sub-units 21, and the first clamp slots 112 and the second clamp slots 122 of the lower grille unit 10 are respectively inserted to the lower ends of the side walls of the clamp sub-units 21, as shown in FIG. 3.

The clamp sub-unit 21 may be formed by stamping a zirconium alloy tube or by crimping a zirconium alloy strip, and the lateral cross-sectional shape of which may be quadrangular, octagonal, triangular, etc. Alternatively, the clamp sub-unit 21 can be made by other materials different from that of the grille unit 10, such as a nickel-based alloy with a low creep rate and the like, to meet specific functional requirements, and ensure that the fuel rod can be effectively clamped during a whole service life, and reduce the risk of fretting wear and failure of the fuel rod.

As shown in FIG. 8, in this embodiment, the plurality of clamp sub-units 21 are cross-joined on a same plane to form the integrated clamp unit 20.

The side wall of each clamp sub-unit 21 is provided with joining slots 211 with openings facing one side, and the adjacent clamp sub-unit 21 is upside down to be matched and inserted, with the openings of their joining slots 211 toward one another.

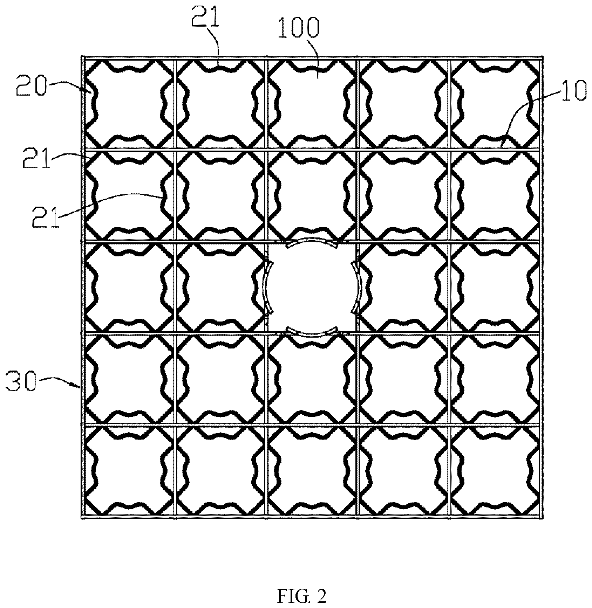

Each clamp sub-unit 21 is cross-joined with at least two clamp sub-units 21. As shown in FIG. 2 and FIG. 8, the clamp sub-units 21 on an outer ring of the clamp unit 20 are cross-joined with two or three adjacent clamp sub-units 21, each side of the clamp sub-unit 21 on an inner ring is cross-joined with one clamp sub-unit 21, namely, the clamp sub-unit 21 is cross-joined with four clamp sub-units 21, and the clamp sub-units 21 are sequentially cross-joined in this manner to form the integrated clamp unit 20 which can be in a Chinese knot-like structure. After the clamp sub-units 21 are cross-joined, welding is performed on the crossing points to form a secured structure.

Alternatively, the clamp unit 20 may be integrally formed by additive manufacturing techniques.

As shown in FIG. 2 and FIG. 3, since the clamp sub-units 21 are cross-joined, when the grille unit 10 is inserted to the clamp sub-units 21 via the first clamp slots 112 and the second clamp slots 122 thereof, the grille unit 10 is mainly inserted to the intersections of the clamp sub-units 21, so that each of the first clamp slots 112 and each of the second clamp slots 122 can be inserted to the sidewalls of the adjacent two clamp sub-units 21. The matching of the clamp unit 20 and the grille unit 10 can provide additional support to the corners of the grille cell units of the spacer grid and improve the impact strength of the spacer grid.

Furthermore, as shown in FIG. 1 and FIG. 2, the spacer grid of the invention further includes an outer frame 30 arranged around a periphery of the two grill units 10. The outer frame 30 is welded and secured with a periphery of the grill unit 10 and a periphery of the clamp unit 20, to enclose the grill unit 10 and the clamp unit 20 within the outer frame. The outer frame 30 may be provided with slot holes for matching and welding side edges of the first strip 11 and the second strip 12 respectively.

The outer frame 30 may be a frame surrounded by a plurality of enclosing plates, or a frame formed by bending one enclosing plate a plurality of times.

The spacer grid of the invention further includes a connection structure spaced arranged on the grille unit 10 for securing the guide tube. With the welded connection between the connection structure and the guide tube, the lateral rigidity of the fuel assembly can be ensured, the bending resistance under a normal operating condition of the fuel assembly can be improved, and the collision margin under an accident condition of the spacer grid is improved.

As shown in FIG. 1 and FIG. 3, in this embodiment, the connection structure includes welding tabs 40 which are provided on the upper and lower grill units 10 in such a manner as to protrude oppositely. Preferably, the welding tabs 40 are provided with four pieces, respectively located on two adjacent first strips 11 and two adjacent second strips 12, and enclosing one grille cell 100 of the grille unit 10, for welding and securing the guide tube.

In other embodiments, the connection structure may alternatively include a connection tube fixedly penetrating through the grille cells 100 of the upper and lower grille units 10, for securing the guide tube which penetrates therethrough.

The fuel assembly of the invention includes the spacer grid described above.

The fuel assembly further includes a top nozzle and a bottom nozzle, a plurality of guide tubes, a reactivity worth compensation rod and a plurality of fuel rod sets. A plurality of spacer grids are spaced arranged between the top nozzle and the bottom nozzle along an axial direction of the fuel assembly, the guide tubes penetrate through the spacer grids and are arranged between the top nozzle and the bottom nozzle, and the reactivity worth compensation rods and the fuel rods are clamped in the grille cells 100 of the spacer grids. When the guide tubes penetrate into the spacer grid, the guide tubes sequentially penetrate through the upper grille unit 10, the clamp unit 20 and the lower grille unit 10, and are welded and secured with the connection structure on the grille unit 10, so that the lateral rigidity of the fuel assembly can be ensured, the bending resistance under a normal operating condition of the fuel assembly can be improved, and the collision buckling or deformation margin under an accident condition of the spacer grid can be improved. The non-fixed connection between the clamp unit 20 with the grill unit 10 can reduce the stress of the guide tube, prevent the fuel rod from bending, and reduce the growth of the assembly.

## Claims

1. A spacer grid, comprising two grille units (10) and a clamp unit (20); wherein the two grille units (10) are disposed in an opposing vertical configuration, and the clamp unit (20) is inserted between the two grille units (10) and movable vertically relative to the grille units (10), forming a floating connection between the two grille units (10); the grille units (10) comprise
a plurality of parallelly spaced first strips (11) and a plurality of parallelly spaced second strips (12), and the first strips (11) and the second strips (12) are crossed with each other to form the network-like grille units (10);
the clamp unit (20) comprises a plurality of annular clamp sub-units (21), and the plurality of clamp sub-units (21) are respectively accommodated in grille cells (100) of the grille units (10), and are arranged for being used for clamping fuel rods and reactivity worth compensation rods respectively; the plurality of clamp sub-units (21) are cross-joined on a same plane to form the integrated clamp unit (20); a side wall of each clamp sub-unit (21) is provided with joining slots (211) with openings facing one side, and an adjacent clamp sub-unit (21) is upside down to be matched and inserted, with the openings of their joining slots (211) toward one another.

2. The spacer grid according to claim 1, wherein the first strip (11) is provided with a plurality of first insertion slots (111) spaced along a length direction thereof and first clamp slots (112) arranged on two sides of the first insertion slot (111); the first insertion slot (111) and the first clamp slot (112) are disposed on a same side of the first strip (11), and openings of the first insertion slot (111) and the first clamp slot (112) face a same direction;
the second strip (12) is provided with a plurality of second insertion slots (121) spaced along a length direction thereof and second clamp slots (122) arranged on two sides of the second insertion slot (121); the second insertion slot (121) and the second clamp slot (122) are disposed on two opposite sides of the second strip (12), and openings of the second insertion slot (121) and the second clamp slot (122) face opposite directions;
the first insertion slot (111) and the second insertion slot (121) are matched and inserted, with their openings toward one another; the first clamp slots (112) and the second clamp slots (122) respectively clamp the clamp sub-units (21).

3. The spacer grid according to claim 2, wherein the first strip (11) is provided with a plurality of spaced protruding first mixing vanes; the first mixing vane obliquely bends in a lateral direction and extends into the grille cell (100) of the grille unit (10);
the second strip (12) is provided with a plurality of spaced protruding second mixing vanes; and the second mixing vane obliquely bends in a lateral direction and extends into the grille cell (100) of the grille unit (10).

4. The spacer grid according to claim 1, wherein each of the clamp sub-units (21) is cross-joined with at least two of the clamp sub-units (21).

5. The spacer grid according to any of claims 1 to 4, wherein the spacer grid further comprises an outer frame (30) arranged around a periphery of the two grille units (10).

6. The spacer grid according to any of claims 1 to 4, wherein the spacer grid further comprises a connection structure provided on the grille unit (10) for securing the guide tube.

7. The spacer grid according to claim 6, wherein the connection structure comprises welding tabs (40) projecting oppositely on the upper and lower grille units (10).

8. The spacer grid according to claim 6, wherein the connection structure comprises a connection tube fixedly penetrating through the grille cells of the upper and lower grille units (10).

9. A fuel assembly, comprising the spacer grid according to any of claims 1 to 8.

## Patentansprüche

1. Abstandshaltergitter, umfassend zwei Gittereinheiten (10) und eine Klemmeinheit (20);
wobei die beiden Gittereinheiten (10) in einer gegenüberliegenden vertikalen Konfiguration angeordnet sind und die Klemmeinheit (20) zwischen die beiden Gittereinheiten (10) eingefügt ist und relativ zu den Gittereinheiten (10) vertikal bewegbar ist, wodurch eine schwimmende Verbindung zwischen den beiden Gittereinheiten (10) gebildet wird;
wobei die Gittereinheiten (10) eine Vielzahl parallel beabstandeter erster Streifen (11) und eine Vielzahl parallel beabstandeter zweiter Streifen (12) umfassen und die ersten Streifen (11) und die zweiten Streifen (12) miteinander gekreuzt sind, um die netzartigen Gittereinheiten (10) zu bilden;
wobei die Klemmeinheit (20) eine Vielzahl ringförmiger Klemmuntereinheiten (21) umfasst und die Vielzahl von Klemmuntereinheiten (21) jeweils in Gitterzellen (100) der Gittereinheiten (10) aufgenommen sind und zur Verwendung zum Einklemmen von Brennstäben bzw. Reaktivitätswert-Kompensationsstäben angeordnet sind; wobei die Vielzahl von Klemmuntereinheiten (21) in der gleichen Ebene kreuzweise verbunden sind, um die integrierte Klemmeinheit (20) zu bilden; wobei eine Seitenwand jeder Klemmuntereinheit (21) mit Verbindungsschlitzen (211) mit einer Seite zugewandten Öffnungen bereitgestellt ist und eine benachbarte Klemmuntereinheit (21) auf dem Kopf steht, um so angepasst und eingefügt zu werden, dass die Öffnungen ihrer Verbindungsschlitze (211) einander zugewandt sind.

2. Abstandshaltergitter nach Anspruch 1, wobei der erste Streifen (11) mit einer Vielzahl erster Einfügungsschlitze (111), die entlang einer Längsrichtung davon beabstandet sind, und erster Klemmschlitze (112), die auf zwei Seiten des ersten Einfügungsschlitzes (111) angeordnet sind, bereitgestellt ist; wobei der erste Einfügungsschlitz (111) und der erste Klemmschlitz (112) auf der gleichen Seite des ersten Streifens (11) angeordnet sind und Öffnungen des ersten Einfügungsschlitzes (111) und des ersten Klemmschlitzes (112) der gleichen Richtung zugewandt sind;
wobei der zweite Streifen (12) mit einer Vielzahl zweiter Einfügungsschlitze (121), die entlang einer Längsrichtung davon beabstandet sind, und zweiter Klemmschlitze (122), die auf zwei Seiten des zweiten Einfügungsschlitzes (121) angeordnet sind, bereitgestellt ist; wobei der zweite Einfügungsschlitz (121) und der zweite Klemmschlitz (122) auf zwei gegenüberliegenden Seiten des zweiten Streifens (12) angeordnet sind und Öffnungen des zweiten Einfügungsschlitzes (121) und des zweiten Klemmschlitzes (122) entgegengesetzten Richtungen zugewandt sind;
wobei der erste Einfügungsschlitz (111) und der zweite Einfügungsschlitz (121) so angepasst und eingefügt sind, dass ihre Öffnungen einander zugewandt sind; wobei die ersten Klemmschlitze (112) und die zweiten Klemmschlitze (122) jeweils die Klemmuntereinheiten (21) einklemmen.

3. Abstandshaltergitter nach Anspruch 2, wobei der erste Streifen (11) mit einer Vielzahl beabstandeter vorstehender erster Mischflügel bereitgestellt ist; wobei der erste Mischflügel schräg in eine seitliche Richtung gebogen ist und sich in die Gitterzelle (100) der Gittereinheit (10) hineinerstreckt;
wobei der zweite Streifen (12) mit einer Vielzahl beabstandeter vorstehender zweiter Mischflügel bereitgestellt ist; und der zweite Mischflügel schräg in eine seitliche Richtung gebogen ist und sich in die Gitterzelle (100) der Gittereinheit (10) hineinerstreckt.

4. Abstandshaltergitter nach Anspruch 1, wobei jede der Klemmuntereinheiten (21) mit mindestens zwei der Klemmuntereinheiten (21) kreuzweise verbunden ist.

5. Abstandshaltergitter nach einem der Ansprüche 1 bis 4, wobei das Abstandshaltergitter ferner einen äußeren Rahmen (30) umfasst, der um einen Umfang der beiden Gittereinheiten (10) herum angeordnet ist.

6. Abstandshaltergitter nach einem der Ansprüche 1 bis 4, wobei das Abstandshaltergitter ferner eine Verbindungsstruktur umfasst, die an der Gittereinheit (10) bereitgestellt ist, um das Führungsrohr zu sichern.

7. Abstandshaltergitter nach Anspruch 6, wobei die Verbindungsstruktur Schweißlaschen (40) umfasst, die gegenüberliegend an der oberen und der unteren Gittereinheit (10) vorstehen.

8. Abstandshaltergitter nach Anspruch 6, wobei die Verbindungsstruktur ein Verbindungsrohr umfasst, das die Gitterzellen der oberen und der unteren Gittereinheit (10) fest durchdringt.

9. Brennelement, umfassend das Abstandshaltergitter nach einem der Ansprüche 1 bis 8.

## Revendications

1. Grille d'espacement, comprenant deux unités de grille (10) et une unité de serrage (20) ;
dans laquelle les deux unités de grille (10) sont disposées dans une configuration verticale opposée, et l'unité de serrage (20) est insérée entre les deux unités de grille (10) et mobile verticalement par rapport aux unités de grille (10), formant une connexion flottante entre les deux unités de grille (10) ;
les unités de grille (10) comprennent une pluralité de premières bandes espacées parallèlement (11) et une pluralité de secondes bandes espacées parallèlement (12), et les premières bandes (11) et les secondes bandes (12) sont croisées les unes avec les autres pour former les unités de grille en forme de réseau (10) ;
l'unité de serrage (20) comprend une pluralité de sous-unités de serrage annulaires (21), et la pluralité de sous-unités de serrage (21) sont respectivement logées dans des cellules de grille (100) des unités de grille (10), et sont agencées pour être utilisées respectivement pour le serrage des barres de combustible et des barres de compensation de réactivité ; la pluralité de sous-unités de serrage (21) sont reliées entre elles sur un même plan pour former l'unité de serrage intégrée (20) ; une paroi latérale de chaque sous-unité de serrage (21) est pourvue de fentes de jonction (211) avec des ouvertures faisant face à un côté, et une sous-unité de serrage adjacente (21) est à l'envers pour être appariée et insérée, avec les ouvertures de leurs fentes de jonction (211) l'une vers l'autre.

2. Grille d'espacement selon la revendication 1, dans laquelle la première bande (11) est pourvue d'une pluralité de premières fentes d'insertion (111) espacées le long d'une direction longitudinale de celle-ci et de premières fentes de serrage (112) agencées sur les deux côtés de la première fente d'insertion (111) ; la première fente d'insertion (111) et la première fente de serrage (112) sont disposées sur un même côté de la première bande (11), et les ouvertures de la première fente d'insertion (111) et de la première fente de serrage (112) font face à la même direction ;
la seconde bande (12) est pourvue d'une pluralité de secondes fentes d'insertion (121) espacées le long d'une direction longitudinale de celle-ci et de secondes fentes de serrage (122) agencées sur les deux côtés de la seconde fente d'insertion (121) ; la seconde fente d'insertion (121) et la seconde fente de serrage (122) sont disposées sur deux côtés opposés de la seconde bande (12), et les ouvertures de la seconde fente d'insertion (121) et de la seconde fente de serrage (122) font face à des directions opposées ;
la première fente d'insertion (111) et la seconde fente d'insertion (121) sont appariées et insérées, avec leurs ouvertures l'une vers l'autre ; les premières fentes de serrage (112) et les secondes fentes de serrage (122) serrent respectivement les sous-unités de serrage (21).

3. Grille d'espacement selon la revendication 2, dans laquelle la première bande (11) est pourvue d'une pluralité de premières aubes de mélange saillantes espacées ; la première aube de mélange se courbe obliquement dans une direction latérale et s'étend dans la cellule de grille (100) de l'unité de grille (10) ;
la seconde bande (12) est pourvue d'une pluralité de secondes aubes de mélange saillantes espacées ; et la seconde aube de mélange se courbe obliquement dans une direction latérale et s'étend dans la cellule de grille (100) de l'unité de grille (10).

4. Grille d'espacement selon la revendication 1, dans laquelle chacune des sous-unités de serrage (21) est reliée l'une à l'autre avec au moins deux des sous-unités de serrage (21).

5. Grille d'espacement selon l'une quelconque des revendications 1 à 4, dans laquelle la grille d'espacement comprend en outre un cadre extérieur (30) agencé autour d'une périphérie des deux unités de grille (10).

6. Grille d'espacement selon l'une quelconque des revendications 1 à 4, dans laquelle la grille d'espacement comprend en outre une structure de liaison prévue sur l'unité de grille (10) pour fixer le tube de guidage.

7. Grille d'espacement selon la revendication 6, dans laquelle la structure de liaison comporte des pattes de soudure (40) en saillie opposées sur les unités de grille supérieure et inférieure (10).

8. Grille d'espacement selon la revendication 6, dans laquelle la structure de liaison comprend un tube de liaison traversant fixement les cellules de grille des unités de grille supérieure et inférieure (10).

9. Assemblage combustible, comprenant la grille d'espacement selon l'une quelconque des revendications 1 à 8.
